# EUROPEAN PATENT APPLICATION

(11) **EP 4 835 023 A1**
(43) Date of publication of application: **04.11.2026**
(21) Application number: 23963043.7
(22) Date of filing: 26.12.2023
(51) Int. Cl.: C09D 201/00, C09D 7/63, C09K 3/00

(54) **VISCOSITY MODIFIER FOR NON-AQUEOUS COATING MATERIAL AND NON-AQUEOUS COATING MATERIAL COMPOSITION**

(71) Applicant: Kusumoto Chemicals, Ltd., Tokyo 101-0047 (JP)
(72) Inventor: SATTA, Yusuke, Soka-shi, Saitama 340-0004 (JP); NAKANISHI, Yuki, Soka-shi, Saitama 340-0004 (JP); NAKANO, Kyohei, Soka-shi, Saitama 340-0004 (JP); TAYAMA, Toshiki, Soka-shi, Saitama 340-0004 (JP); MOTOMURA, Takahiro, Soka-shi, Saitama 340-0004 (JP)
(74) Representative: Hasegawa, Kan
(86) International application number: PCT/JP2023/046620
(87) International publication number: WO 2025/141687

(57) **Abstract**

To provide a rheology control agent for non-aqueous coatings that exhibits excellent rheology-modifying effects even when an amide-based rheology control agent consisting of a fatty acid diamide is added to ultra-high-solids coatings or solvent-free coatings, and to provide a non-aqueous coating composition having excellent sagging resistance by containing the rheology control agent. The present invention is a rheology control agent for a non-aqueous coating, the rheology control agent consisting of a fatty acid diamide obtained by condensation reaction between a diamine component and a monocarboxylic acid component, wherein the diamine component is 1,4-diaminobutane, and the non-aqueous coating is a solvent-free coating or an ultra-high-solids coating.

## Description

### [Technical Field]

The present invention relates to rheology control agents for non-aqueous coatings and to non-aqueous coating compositions containing the rheology control agents.

### [Background Art]

Rheology control agents (also referred to as "thixotropic agents") for marine or heavy-duty anticorrosion coatings containing organic solvents include fine powders of clay minerals (e.g., bentonite), hydrogenated castor oil, fatty acid diamides, and the like. Among these, rheology control agents using fine powders of fatty acid diamides (hereinafter, referred to as "amide-based rheology control agents") are widely used since they exhibit excellent sagging resistance, water resistance, thermal stability, and the like.

For example, PTL 1 discloses a flow control agent for organic vehicles, consisting of a fatty acid diamide obtained by reacting the mixture of a hydrogenated castor oil fatty acid and a straight-chain saturated fatty acid having 6 to 12 carbon atoms with ethylenediamine (hereinafter, also referred to as "EDA") or 1,4-diaminobutane (hereinafter, also referred to as "1,4-DAB") in an equivalent ratio relative to the fatty acids. The mixing ratio of the hydrogenated castor oil fatty acid and the straight-chain saturated fatty acid in the above mixture is set to be within the range of a molar ratio of 8:2 to 3:7.

### [Citation List]

### [Patent Literature]

PTL 1: JP S56-112977 A

### [Summary of Invention]

### [Technical Problem]

In recent years, in the field of marine coatings or heavy-duty anticorrosion coatings, research has been actively conducted on ultra-high-solids coatings that minimize solvent content and solvent-free coatings that do not use organic solvents, in order to reduce environmental impact.

For amide-based rheology control agents to exhibit rheology-modifying effect and sagging resistance, the fatty acid diamide must be heated and swollen in the coating to which the rheology control agent has been added. By heating and swelling the fatty acid diamide in this manner, the fatty acid diamide is activated (transformed into an acicular form), thereby stably imparting rheology control properties to the coating system.

However, when conventionally used amide-based rheology control agents are added to ultra-high-solids coatings or solvent-free coatings, it is difficult to sufficiently activate the fatty acid diamide in the coating, and therefore sufficient rheology-modifying effects cannot be achieved, resulting in sagging when the coating is applied to a vertical surface or the like.

Thus, there has been a strong demand for amide-based rheology control agents that exhibit excellent rheology-modifying effects and sagging resistance in ultra-high-solids coatings that minimize solvent content and solvent-free coatings that do not use organic solvents.

Therefore, the present invention has been made in view of the above circumstances, and aims to provide a rheology control agent for non-aqueous coatings that exhibits excellent rheology-modifying effects even when an amide-based rheology control agent consisting of a fatty acid diamide is added to ultra-high-solids coatings or solvent-free coatings, and to provide a non-aqueous coating composition having excellent sagging resistance by containing the rheology control agent.

### [Solution to Problem]

As a result of intensive studies to solve the above problems, the present inventors have found that the use of 1,4-diaminobutane (1,4-DAB) as a diamine component serving as a raw material for synthesizing a fatty acid diamide used as a rheology control agent enables excellent rheology-modifying effects even when an amide-based rheology control agent is added to ultra-high-solids coatings or solvent-free coatings. The present invention has been made based on these findings.

That is, an aspect of the present invention is a rheology control agent for a non-aqueous coating, the rheology control agent consisting of a fatty acid diamide obtained by a condensation reaction of a diamine component and a monocarboxylic acid component, wherein the diamine component is 1,4-diaminobutane, and the non-aqueous coating is a solvent-free coating or an ultra-high-solids coating.

In one embodiment of the present invention, it is preferred that the monocarboxylic acid component is a mixture of a hydrogenated castor oil fatty acid and a straight-chain saturated fatty acid. In this case, it is more preferred that the straight-chain saturated fatty acid has 8 or more and 10 or less carbon atoms.

In another embodiment of the present invention, it is preferred that the monocarboxylic acid component contains a straight-chain saturated fatty acid having 8 or more and 10 or less carbon atoms.

Furthermore, another aspect of the present invention is a non-aqueous coating composition containing a rheology control agent and a resin, the rheology control agent consisting of a fatty acid diamide obtained by a condensation reaction of a diamine component and a monocarboxylic acid component, wherein the diamine component is 1,4-diaminobutane, and the non-aqueous coating composition is a solvent-free coating composition or an ultra-high-solids coating composition.

In one embodiment of the present invention, it is preferred that the monocarboxylic acid component is a mixture of a hydrogenated castor oil fatty acid and a straight-chain saturated fatty acid. In this case, it is more preferred that the straight-chain saturated fatty acid has 8 or more and 10 or less carbon atoms.

In another embodiment of the present invention, it is preferred that the monocarboxylic acid component contains a straight-chain saturated fatty acid having 8 or more and 10 or less carbon atoms.

### [Advantageous Effects of Invention]

According to the present invention, in rheology control agents for non-aqueous coatings, the use of 1,4-DAB as a diamine component serving as a raw material for synthesizing a fatty acid diamide used as a rheology control agent enables excellent rheology-modifying effects even when the amide-based rheology control agent is added to ultra-high-solids coatings or solvent-free coatings.

### [Description of Embodiments]

In the following description, preferred embodiments of the present invention will be described in detail.

### [Rheology Control Agent for Non-Aqueous Coating]

The rheology control agent according to the present invention is an additive for use in non-aqueous coatings and consists of a specific fatty acid diamide.

### (Fatty Acid Diamide)

The fatty acid diamide according to the present invention is a fatty acid diamide obtained by condensation reaction between a diamine component and a monocarboxylic acid component, and the diamine component is 1,4-diaminobutane (1,4-DAB). That is, the only diamine component used for synthesizing the fatty acid diamide of the present invention is 1,4-DAB.

Examples of the fatty acid diamide of the present invention include a fatty acid diamide (a) including, as main components, three components which are a N-12 hydroxystearic acid N'-alkanoic acid tetramethylene diamide, a N,N'-12 hydroxystearic acid tetramethylene diamide, and a N,N'-alkanoic acid tetramethylene diamide. The fatty acid diamide (a) is obtained by adding an equivalent amount of 1,4-DAB to a mixture of a hydrogenated castor oil fatty acid and a straight-chain saturated fatty acid (hereinafter, simply referred to as "alkanoic acid") and carrying out an amidation reaction. Therefore, when the fatty acid diamide (a) is used as the fatty acid diamide of the present invention, the diamine component is 1,4-DAB, and the monocarboxylic acid component is a mixture of a hydrogenated castor oil fatty acid and an alkanoic acid.

The general formulae of the main components of the fatty acid diamide (a) are as follows.
(1) N-12 hydroxystearic acid N'-alkanoic acid tetramethylene diamide

   CH₃(CH₂)₅CHOH(CH₂)₁₀CONH(CH₂)₄NHCO(CH₂)ₗCH₃

   (where l is a natural number.)
(2) N,N'-12 hydroxystearic acid tetramethylene diamide

   CH₃(CH₂)₅CHOH(CH₂)₁₀CONH(CH₂)₄NHCO(CH₂)₁₀CHOH(CH₂)₅CH₃
(3) N,N'-alkanoic acid tetramethylene diamide

   CH₃(CH₂)ₙCONH(CH₂)₄NHCO(CH₂)ₘCH₃

   (where n and m are each natural numbers.)

The fatty acid diamide (a) contains, in addition to the above three components (1) to (3), small amounts of unreacted raw materials and side reaction products.

The fatty acid diamide according to the present invention is not limited to the fatty acid diamide (a) described above, and may be any other fatty acid diamide obtained by condensation reaction of a diamine component and a monocarboxylic acid component, which are exemplified below. The conditions of the condensation reaction (reaction temperature, formulation ratio of the components, and the like) may be set as appropriate by known methods.

### <Diamine Component>

As described above, only 1,4-DAB is used as the diamine component according to the present invention.

### <Monocarboxylic Acid Component>

The monocarboxylic acid component according to the present invention is not specifically limited, but may include, for example, a straight-chain saturated fatty acid (alkanoic acid). Examples of the alkanoic acids that can be used as the monocarboxylic acid component of the present invention include acetic acid, propionic acid, butyric acid, valeric acid, caproic acid, enanthic acid, caprylic acid, pelargonic acid, capric acid, lauric acid, myristic acid, palmitic acid, stearic acid, arachidic acid and behenic acid. Among these, saturated aliphatic monocarboxylic acids having 12 or fewer carbon atoms (acetic acid, propionic acid, butyric acid, valeric acid, caproic acid, enanthic acid, caprylic acid, pelargonic acid, capric acid, lauric acid, and the like) can be used as the above alkanoic acid. When a fatty acid diamide using such an alkanoic acid is used, the rheology control agent of the present invention can effectively exhibit a rheology-modifying effect.

Among these alkanoic acids, when an alkanoic acid having 8 or more and 10 or less carbon atoms is used, the rheology-modifying effect of the rheology control agent of the present invention can be further enhanced. As a result, the non-aqueous coating composition of the present invention, which contains a rheology control agent consisting of a fatty acid diamide obtained using an alkanoic acid having 8 or more and 10 or less carbon atoms, exhibits excellent sagging resistance.

Further, the monocarboxylic acid component according to the present invention may include a hydrogenated castor oil fatty acid. When a fatty acid diamide using a hydrogenated castor oil fatty acid is used, the rheology control agent of the present invention can effectively exhibit a rheology-modifying effect.

Further, as the monocarboxylic acid component to be subjected to condensation reaction with the diamine component for synthesizing the fatty acid diamide of the present invention, a mixture of a hydrogenated castor oil fatty acid and an alkanoic acid may also be used. When a mixture of a hydrogenated castor oil fatty acid and an alkanoic acid is used as the monocarboxylic acid component, the rheology-modifying effect of the rheology control agent of the present invention can be further enhanced. As a result, the non-aqueous coating composition of the present invention, which contains a rheology control agent consisting of a fatty acid diamide obtained using such a monocarboxylic acid component, exhibits excellent sagging resistance.

Other examples of the monocarboxylic acid component usable in the present invention include unsaturated aliphatic monocarboxylic acids such as oleic acid, linoleic acid, ricinoleic acid, linolenic acid, eicosenoic acid, erucic acid, and mixed fatty acids obtained from natural fats and oils (tall oil fatty acid, rice bran fatty acid, soybean oil fatty acid, tallow fatty acid, etc.).

### <Method for Synthesizing Fatty Acid Diamide>

The fatty acid diamide according to the present invention is obtained by adding an equivalent amount of the diamine component to the monocarboxylic acid component, and subjecting the mixture to a condensation polymerization (amidation) at 150°C to 200°C. For example, the diamine component (including at least 1,4-DAB) and the monocarboxylic acid component as raw materials are introduced into a reaction vessel such as a four-neck flask, and the raw materials are stirred under an inert gas atmosphere (for example, under a nitrogen gas stream or the like) to prepare a mixture. Then, the mixture of the raw materials is heated and subjected to a condensation polymerization reaction at 150°C to 200°C for 4 hours to 10 hours to synthesize the fatty acid diamide of the present invention.

### (Hydrogenated Castor Oil)

Further, the rheology control agent of the present invention may contain hydrogenated castor oil to the extent that it does not hinder the effects of the present invention. The hydrogenated castor oil is a triglyceride of a saturated fatty acid obtained by hydrogenating castor oil. The hydrogenated castor oil may be a commercially available product, and examples thereof include C-wax (manufactured by Kokura Synthetic Industries, Ltd.), Kaowax 85P (manufactured by Kao Corporation), hydrogenated castor oil A (manufactured by Itoh Oil Chemicals Co., Ltd.) and hydrogenated castor oil (Yamakei Industries Co., Ltd.).

### (Method for Producing Rheology Control Agent)

The rheology control agent of the present invention described above can be produced as follows. For example, the molten liquid of the fatty acid diamide synthesized as described above may be taken out as a solid. The solid fatty acid diamide is pulverized into a desired particle size to thereby produce a powdery rheology control agent consisting of the fatty acid diamide. The method for pulverizing the solid fatty acid diamide is not specifically limited, and for example, a jet mill can be used. Further, the particle size in pulverization is not specifically limited, and may be, for example, about 1 µm to 50 µm.

### (Applications of Rheology Control Agent)

The rheology control agent according to the present invention is suitable for use as additives for non-aqueous coatings. Examples of non-aqueous coatings include marine coatings and heavy-duty anticorrosion coatings. When the rheology control agent according to the present invention is used as an additive for non-aqueous coatings, it is preferred to pulverize a solid fatty acid diamide to produce a powder of a rheology control agent, as described above. The non-aqueous coating containing the rheology control agent of the present invention is limited to solvent-free coatings and ultra-high-solids coatings. Details of the "solvent-free coatings" and "ultra-high-solids coatings" will be described later.

### [Non-Aqueous Coating Composition]

The non-aqueous coating composition according to the present invention contains the rheology control agent described above and a resin as essential components. The amide-based rheology control agent is activated when heated and dispersed in a non-aqueous coating and exhibits effects (rheology-modifying effect, etc.) of the rheology control agent, but the degree of activation is influenced by the coating formulation and the conditions of heating and dispersion (temperature, dispersion shear, dispersion time, etc.). On the other hand, when the coating formulation and the heating and dispersion conditions are the same, the ease of activation depends on the composition of the rheology control agent. Therefore, the effect of the present invention is not limited by the content of the rheology control agent in the coating. However, when the content of the rheology control agent in the coating is too low, the effects of the rheology control agent are reduced. On the other hand, when the content of the rheology control agent in the coating is too high, the coating thickens significantly, making it difficult to disperse the rheology control agent in the coating and to handle and apply the coating. Therefore, the content of the rheology control agent in the non-aqueous coating composition is preferably 0.2 mass% or greater and 5 mass% or less.

The non-aqueous coating composition of the present invention is a solvent-free coating composition or an ultra-high-solids coating composition. A solvent-free coating is a coating that does not contain volatile solvents (such as organic solvents) used to dissolve resins in the coating, and has the advantage of contributing to VOC reduction since no solvent needs to be evaporated during film formation. In addition, since no volatile solvent components are contained, the applied thickness substantially becomes the dry thickness, which is suitable for coating applications in areas where a large coating thickness is desired. Furthermore, an ultra-high-solids coating is a coating in which the content of volatile solvents in the coating is minimized. In the present invention, a coating in which the content of volatile solvents is 15 mass% or less relative to the total amount of the coating is referred to as an "ultra-high-solids coating".

In general, a "solvent-free coating" refers to a coating that does not contain volatile solvents used to dissolve resins in the coating, but if necessary, it may contain liquid components (components that remain in the coating film) such as reactive diluents, non-reactive diluents and silane coupling agents. Therefore, the "solvent-free coating" in the present invention includes not only completely solvent-free coatings that are completely free of liquid components capable of functioning as solvents, but also coatings that contain components that remain in the coating film as described above and do not contain volatile solvents. Examples of the reactive diluent include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, stearylglycidyl ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like. Further, suitable examples of the non-reactive diluent include petroleum resin-based diluents. Examples of the petroleum resin-based diluent include aliphatic or aromatic high-boiling oils, phenol-modified products of aliphatic or aromatic polymers, xylene resins, toluene resins, and the like.

### (Solvent)

Examples of the solvent in the present invention, that is, a volatile solvent used to dissolve resins in the coating, include organic solvents, and the solvent is not specifically limited as long as it is used in the coating field.

Examples of the organic solvent include alcohols such as methanol, ethanol, isopropyl alcohol, 1-butanol (n-butanol), 2-butanol, 1-pentanol, octyl alcohol, benzyl alcohol, glycerin, ethylene glycol and propylene glycol; carboxylic acids such as acetic acid; aliphatic hydrocarbons such as hexane, heptane, octane and decane; aromatic hydrocarbons such as toluene and xylene; amides such as dimethyl sulfoxide, N,N-dimethylformamide, dimethylacetamide and acetanilide; ketones such as acetone, methyl ethyl ketone, methyl isobutyl ketone and cyclohexanone; halogenated solvents such as methylene chloride and chloroform; carbonates such as ethylene carbonate, propylene carbonate, dimethyl carbonate and diethyl carbonate; esters such as methyl acetate, ethyl acetate, propyl acetate, butyl acetate, methyl butyrate and propylene glycol monomethyl ether acetate (PMA); ethers such as propylene glycol monomethyl ether (PM); acetonitrile, propionitrile, and the like. The above-mentioned solvents may be used singly or in combination of two or more.

### (Organic Medium)

In the non-aqueous coating composition of the present invention containing a solvent (solvent-containing coating), an organic medium containing reactive functional groups or a non-reactive organic medium may be used in combination with the above-mentioned solvent.

Examples of the organic medium containing reactive functional groups include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, stearylglycidyl ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like.

Further, suitable examples of the non-reactive organic medium include petroleum resin-based organic media having a viscosity at 25°C of 1 cps to 200 cps and a heating residue of 90% or greater. Examples of the petroleum resin-based organic medium include aliphatic or aromatic high-boiling oils, phenol-modified products of aliphatic or aromatic polymers, xylene resins, toluene resins, and the like.

### (Resin)

The non-aqueous coating composition of the present invention further contains a resin as the main component for forming a coating film.

The resin for coatings that can be used in the non-aqueous coating composition of the present invention is not specifically limited as long as it is conventionally used as a base resin for non-aqueous coatings, and various resins may be blended into the non-aqueous coating composition. Examples of the base resin for non-aqueous coatings that can be used in the non-aqueous coating composition of the present invention include alkyd resins, acrylic resins, acrylic urethane resins, melamine resins, urethane resins, epoxy resins, coumarone resins, urea resins, phenolic resins, vinyl chloride resins, phenoxy resins, silicone resins, fluororesins, Nylon resins, styrene-butadiene resins, nitrile-butadiene resins, petroleum resins, rosin, drying oils, boiled oils, acetyl cellulose, nitrocellulose, and the like. These resins may be, for example, thermosetting type, UV-curable type, EB-curable type, oxidative curable type, photocationic curable type, peroxide curable type or acid/epoxy curable type that cure through a chemical reaction in the presence or absence of a catalyst, or may be resins having high glass transition temperature and forming a film merely by volatilization of a diluting solvent without involving a chemical reaction. Further, examples of the curing agent include amino resins, melamine resins, isocyanate compounds, block isocyanate compounds, epoxy compounds, and the like. The base resins may be used singly or in combination of two or more.

The content of the resin in the non-aqueous coating composition is preferably 20 mass% to 99.5 mass% from the viewpoint of film formability and the like.

### (Filler)

The non-aqueous coating composition of the present invention may further contain a filler such as extender pigments, coloring pigments and metallic pigments from the viewpoint of improving the appearance and properties of the coating film.

Examples of the filler include extender pigments such as calcium carbonate (ground calcium carbonate (GCC), precipitated calcium carbonate (PCC), and the like), barium sulfate, silicon dioxide, aluminum hydroxide, talc, organic fibers and glass powder; coloring pigments such as titanium dioxide, carbon black, chrome yellow, cadmium yellow, ocher, titanium yellow, zinc chromate, iron oxide red, aluminosilicate, quinacridone pigments, phthalocyanine pigments, anthraquinone pigments, diketopyrrolopyrrole pigments, benzimidazolone pigments and isoindolinone pigments; and metallic pigments such as aluminum flakes, copper flakes, micaceous iron oxide, mica and scaly powder of mica coated with metal oxide.

Although the non-aqueous coating composition of the present invention does not necessarily contain a filler, the content of the filler in the non-aqueous coating composition is preferably 0.001 mass% to 80 mass% from the viewpoint of achieving the purpose of adding the filler.

### (Other Additives)

The non-aqueous coating composition of the present invention may contain other substances to the extent that they do not impair the characteristics of the non-aqueous coating composition and purposes of the present invention. Examples of such substances include water scavengers (for example, silane coupling agents), adhesion improvers, surfactants, curing catalysts, plasticizers, film-forming auxiliary agents, dryers, anti-fouling agents, sensitizers, antioxidants, photostabilizers, UV absorbers, water-resistant agents, preservatives and mold inhibitors, defoaming agents, leveling agents, dispersants, flame retardants, antistatic agents, release agents, deodorants, fragrances, and the like.

### (Method for Producing Non-Aqueous Coating Composition)

The method for producing a non-aqueous coating composition of the present invention is not specifically limited, but a rheology control agent consisting of a fatty acid diamide may be added to a resin in advance and dispersed homogeneously, and the resulting homogeneous dispersion may be blended with the remaining raw materials, or the rheology control agent may be added and mixed together with various additives, solvents and resins when preparing the non-aqueous coating composition. If the dispersion of the rheology control agent in the non-aqueous coating composition is insufficient, the effect of the present invention may not be fully achieved.

### (Method for Using Non-Aqueous Coating Composition)

The non-aqueous coating composition of the present invention may be used in the form of a dispersion, or may be used as a dried powdery non-aqueous coating composition obtained by removing the liquid components such as solvents from the dispersion by drying or the like.

The non-aqueous coating composition of the present invention can be applied to the surface of various substrates at a desired film thickness by a known coating method, such as roller coating, brush coating, air spray, airless spray or electrostatic coating. Further, a coated article having a coating film composed of a cured product of the non-aqueous coating composition can be obtained by curing the non-aqueous coating composition applied to a surface of a substrate.

Examples of the substrate include metal materials such as iron, aluminum, brass, copper, stainless steel, tinplate, galvanized steel, alloyed zinc (Zn-Al, Zn-Ni, Zn-Fe, etc.) and plated steel; plastic materials such as resins, such as polyethylene resins, polypropylene resins, acrylonitrile-butadiene-styrene (ABS) resins, polyamide resins, acrylic resins, vinylidene chloride resins, polycarbonate resins, polyurethane resins and epoxy resins, and various FRPs; and inorganic materials such as glass, cement and concrete, which may be subjected to a surface treatment or the like.

### (Applications of Non-Aqueous Coating Composition)

The non-aqueous coating composition of the present invention can be used, for example, for marine coatings or anticorrosion coatings, but is not limited to such applications and can be used in various applications where non-aqueous coatings are applicable in general.

Some preferred embodiments of the present invention have been described above, but the present invention is not limited to the aforementioned embodiments. That is, other embodiments and various modifications that would occur to those skilled in the art within the scope of the appended claims should be construed as being within the technical scope of the present invention.

### Examples

The present invention will be specifically described below by using examples. The present invention is not limited to these examples in any manner. In the examples, "%" and "parts" indicate "mass%" and "parts by mass," respectively, unless otherwise specified.

### (Synthesis of Fatty Acid Diamide)

The diamine component and the monocarboxylic acid component shown in Table 1 as raw materials were introduced into a four-neck flask at molar ratios shown in Table 1, and reacted at 190°C for 6 hours under a nitrogen gas stream while removing water generated during the reaction to thereby obtain fatty acid diamides of Synthesis Examples E1, E2 and C1 to C4.

**[Table 1]**

| Table 1. Formulation Composition of Fatty Acid Diamides | | | | | | | |
|---|---|---|---|---|---|---|---|
| | Fatty Acid Diamide | Monocarboxylic Acid Component (molar ratio) | | | Diamine Component (molar ratio) | | |
| | | Hydrogenated Castor Oil Fatty Acid | Caprylic Acid | Capric Acid | EDA | 1,4-DAB | HMDA |
| | | | C8 | C10 | C2 | C4 | C6 |
| Preparation Example 1 | Synthesis Example E1 | 5 | 5 | | | 5 | |
| Preparation Example 2 | Synthesis Example E2 | 5 | | 5 | | 5 | |
| Comparative Preparation Example 1 | Synthesis Example C1 | 5 | 5 | | 5 | | |
| Comparative Preparation Example 2 | Synthesis Example C2 | 5 | 5 | | | | 5 |
| Comparative Preparation Example 3 | Synthesis Example C3 | 5 | | 5 | 5 | | |
| Comparative Preparation Example 4 | Synthesis Example C4 | 5 | | 5 | | | 5 |

### (Production of Rheology Control Agent)

Next, the fatty acid diamides of Synthesis Examples E1, E2 and C1 to C4 were each pulverized using a pulverizer into particles with a median diameter in the range of 1 µm to 10 µm to thereby obtain rheology control agents of Preparation Examples 1 and 2 and Comparative Preparation Examples 1 to 4.

### [Experimental Example 1: Solvent-Free Coating Formulation]

This experimental example evaluates the rheology-modifying effect and sagging resistance when the non-aqueous coating composition is a solvent-free coating composition.

### (Production of Non-Aqueous Coating Composition)

The rheology control agents of Preparation Examples 1 and 2 and Comparative Preparation Examples 1 to 4 obtained as described above were used to produce non-aqueous coating compositions of Examples 1 and 2 and Comparative Examples 1 to 4 with Formulation α shown in Table 2 or Formulation β shown in Table 2.

### <Example 1 and Comparative Examples 1 to 3>

In Example 1 and Comparative Examples 1 and 2, as shown in Table 2, 39.2 parts of jER (registered trademark) 806 (epoxy resin manufactured by Mitsubishi Chemical Corporation) as a resin, 11.3 parts of LS-632 (bifunctional reactive diluent manufactured by Hubei Greenhome Materials Technology, Inc.) as a reactive diluent, 2.3 parts of Sila-Ace (registered trademark) S510 (silane coupling agent manufactured by JNC Corporation), 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (rutile titanium oxide manufactured by Ishihara Sangyo Kaisha, Ltd.) as pigments, and 1.5 parts of the rheology control agent were provided, and dispersed for 10 minutes in a thermostatic bath at 60°C using a dissolver (5 cm blade diameter) to thereby obtain an epoxy base component(PART A). 21.5 parts of Ancamine 2644 (amine-based curing agent manufactured by Evonik Japan Co., Ltd.) as a curing agent (PART B) was added and mixed with this base component to thereby obtain non-aqueous coating compositions of Example 1 and Comparative Examples 1 and 2. Further, a non-aqueous coating composition of Comparative Example 3 was obtained in the same manner as in Example 1, except that it did not contain a rheology control agent. Table 4 shows the rheology control agents and coating formulations used in Example 1 and Comparative Examples 1 to 3.

### <Example 2 and Comparative Examples 4 to 6>

In Example 2 and Comparative Examples 4 and 5, as shown in Table 3, 39.2 parts of jER (registered trademark) 806 (epoxy resin manufactured by Mitsubishi Chemical Corporation) as a resin, 11.3 parts of LS-AGE (monofunctional reactive diluent manufactured by Hubei Greenhome Materials Technology, Inc.) as a reactive diluent, 2.3 parts of Sila-Ace (registered trademark) S510 (silane coupling agent manufactured by JNC Corporation), 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (rutile titanium oxide manufactured by Ishihara Sangyo Kaisha, Ltd.) as pigments, and 1.5 parts of the rheology control agent were provided, and dispersed for 10 minutes in a thermostatic bath at 60°C using a dissolver (5 cm blade diameter) to thereby obtain an epoxy base component (PART A). 19.0 parts of Ancamine 2644 (amine-based curing agent manufactured by Evonik Japan Co., Ltd.) as a curing agent (PART B) was added and mixed with the base component to thereby obtain non-aqueous coating compositions of Example 2 and Comparative Examples 4 and 5. Further, a non-aqueous coating composition of Comparative Example 6 was obtained in the same manner as in Example 2, except that it did not contain a rheology control agent. Table 5 shows the rheology control agents and coating formulations used in Example 2 and Comparative Examples 4 to 6.

**[Table 2]**

| Table 2. Coating Formulation *α* | | | |
|---|---|---|---|
| Part | component | | Amount (parts by mass) |
| A | a | jER806 | 39.1 |
| | | LS-632 | 11.3 |
| | | Sila-Ace S510 | 2.3 |
| | b | Talc No. 1 | 8.8 |
| | | PG-K10 | 15.0 |
| | | Barium Sulfate BA | 22.1 |
| | | Tipaque R-820 | 1.3 |
| | c | Rheology Control Agent | 1.0 |
| Part A Total | | | 101.0 |
| B | Ancamine 2644 | | 21.5 |

**[Table 3]**

| Table 3. Coating Formulation *β* | | | |
|---|---|---|---|
| Part | component | | Amount (parts by mass) |
| A | a | jER806 | 39.1 |
| | | LS-AGE | 11.3 |
| | | Sila-Ace S510 | 2.3 |
| | b | Talc No. 1 | 8.8 |
| | | PG-K10 | 15.0 |
| | | Barium Sulfate BA | 22.1 |
| | | Tipaque R-820 | 1.3 |
| | c | Rheology Control Agent | 1.0 |
| Part A Total | | | 101.0 |
| B | Ancamine 2644 | | 19.0 |

**[Table 4]**

| Table 4. Coating Formulation Composition and Evaluation Results 1 | | | | |
|---|---|---|---|---|
| No. | Rheology Control Agent | Coating Formation | Coating Viscosity [P] | Sagging Limit Film Thickness [µm] |
| Example 1 | Preparation Example 1 | Formulation *α* | 60.9 | 1500 |
| Comparative Example 1 | Comparative Preparation Example 1 | Formulation *α* | 24.5 | 300 |
| Comparative Example 2 | Comparative Preparation Example 2 | Formulation *α* | 13.4 | 200 |
| Comparative Example 3 | - | Formulation *α* | 5.5 | 100 or less |

**[Table 5]**

| Table 5. Coating Formulation Composition and Evaluation Results 2 | | | | |
|---|---|---|---|---|
| No. | Rheology Control Agent | Coating Formation | Coating Viscosity [P] | Sagging Limit Film Thickness [µm] |
| Example 2 | Preparation Example 2 | Formulation *β* | 64.0 | 1500 |
| Comaparative Example 4 | Comparative Preparation Example 3 | Formulation *β* | 32.2 | 700 |
| Comaparative Example 5 | Comparative Preparation Example 4 | Formulation *β* | 8.4 | 100 |
| Comaparative Example 6 | - | Formulation *β* | 3.5 | 100 or less |

### (Evaluation Method)

For the non-aqueous coating compositions of Examples 1 and 2 and Comparative Examples 1 to 6 obtained as described above, the rheology-modifying effect and sagging resistance were evaluated as follows.

### <Evaluation of Rheology-Modifying Effect>

The viscosity (P) at 25°C and 60 rpm was measured using a B-type viscometer on the day after the non-aqueous coating composition was prepared as described above. Tables 4 and 5 show the measurement results. The higher the viscosity of the non-aqueous coating composition, the greater the rheology-modifying effect of the rheology control agent.

### <Evaluation of Sagging Resistance>

As an index of sagging resistance, the sagging limit film thickness of the non-aqueous coating compositions prepared as described above was measured. Specifically, using a sag tester (trade name "Sag tester BOX 100-500, 600-1000, 800-1200, 1100-1500, 1200-1600, or 1600-2000", an anti-sag tester manufactured by Taiyukizai Co., Ltd.), the non-aqueous coating composition of any of Examples 1 and 2 and Comparative Examples 1 to 6 was applied to sagging test paper (trade name "All black measurement paper", manufactured by Taiyukizai Co., Ltd.) at five different film thicknesses differing by 100 µm (100 µm to 500 µm, 600 µm to 1,000 µm, 800 µm to 1,200 µm, 1,100 µm to 1,500 µm, 1,200 µm to 1,600 µm, or 1,600 µm to 2,000 µm). As a result, the sagging test paper had coating strips with five different film thicknesses at predetermined intervals. Next, the test paper was vertically placed with the thinner coating strips positioned upward and air-dried at room temperature. Then, the film thickness of the coating strip one step thinner than the coating strip for which sagging of the coating beyond the interval between coating strips was first observed and contact with the lower coating strip was recognized was defined as the sagging limit film thickness (µm). In the present examples, when a sagging limit film thickness , as measured by the above method, was 800 µm or greater, the non-aqueous coating composition was determined to have sufficient sagging resistance to solve the problems of the present invention.

### (Evaluation Results)

Tables 4 and 5 above show the results of evaluation of the rheology-modifying effect and sagging resistance evaluated as described above.

As shown in Tables 4 and 5, the non-aqueous coating compositions of Examples 1 and 2, which contained 1,4-DAB as the diamine component, showed significant differences in viscosity and sagging limit film thickness, and exhibited superior rheology-modifying effect and sagging resistance, as compared with the non-aqueous coating compositions of Comparative Examples 1, 2, 4 and 5, which contained diamines other than 1,4-DAB (EDA or HMDA) as the diamine component, and the non-aqueous coating compositions of Comparative Examples 3 and 6, which contained no rheology control agent.

### [Experimental Example 2: Ultra-High-Solids Coating Formulation]

This experimental example evaluates the rheology-modifying effect and sagging resistance when the non-aqueous coating composition is an ultra-high-solids coating composition.

### (Production of Non-Aqueous Coating Composition)

The rheology control agents of Preparation Examples 1 and 2 and Comparative Preparation Examples 1 and 3 obtained as described above were used to produce non-aqueous coating compositions of Examples 3 and 4 and Comparative Examples 7 and 9 with Formulation γ shown in Table 6 or Formulation δ shown in Table 7.

### <Example 3 and Comparative Examples 7 and 8>

In Example 3 and Comparative Examples 7 and 8, as shown in Table 6, 39.1 parts of jER (registered trademark) 806 (epoxy resin manufactured by Mitsubishi Chemical Corporation) as a resin, 11.3 parts of LS-632 (bifunctional reactive diluent manufactured by Hubei Greenhome Materials Technology, Inc.) as a reactive diluent, 2.3 parts of Sila-Ace (registered trademark) S510 (silane coupling agent manufactured by JNC Corporation), 2.0 parts of dimethyl carbonate as an organic solvent, 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (rutile titanium oxide manufactured by Ishihara Sangyo Kaisha, Ltd.) as pigments, and 1.0 part of the rheology control agent were provided, and dispersed for 10 minutes in a thermostatic bath at 60°C using a dissolver (5 cm blade diameter) to thereby obtain an epoxy base component (PART A). As PART B, 21.5 parts of Ancamine 2644 (amine-based curing agent manufactured by Evonik Japan Co., Ltd.) and 9.1 parts of xylene were added and mixed with this base component to thereby obtain non-aqueous coating compositions of Example 3 and Comparative Example 7. Further, a non-aqueous coating composition of Comparative Example 8 was obtained in the same manner as in Example 3, except that it did not contain a rheology control agent. Table 8 shows the rheology control agents and coating formulations used in Example 3 and Comparative Examples 7 and 8.

### <Example 4 and Comparative Examples 9 and 10>

In Example 4 and Comparative Examples 9 and 10, as shown in Table 7, 39.1 parts of jER (registered trademark) 806 (epoxy resin manufactured by Mitsubishi Chemical Corporation) as a resin, 11.3 parts of LS-632 (bifunctional reactive diluent manufactured by Hubei Greenhome Materials Technology, Inc.) as a reactive diluent, 2.3 parts of Sila-Ace (registered trademark) S510 (silane coupling agent manufactured by JNC Corporation), 2.0 parts of dimethyl carbonate as an organic solvent, 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (rutile titanium oxide manufactured by Ishihara Sangyo Kaisha, Ltd.) as pigments, and 1.0 part of the rheology control agent were provided, and dispersed for 10 minutes in a thermostatic bath at 60°C using a dissolver (5 cm blade diameter) to thereby obtain an epoxy base component (PART A). As PART B, 19.0 parts of Ancamine 2644 (amine-based curing agent manufactured by Evonik Japan Co., Ltd.) and 9.1 parts of xylene were added and mixed with this base component to thereby obtain non-aqueous coating compositions of Example 4 and Comparative Example 9. Further, a non-aqueous coating composition of Comparative Example 10 was obtained in the same manner as in Example 4, except that it did not contain a rheology control agent. Table 9 shows the rheology control agents and coating formulations used in Example 4 and Comparative Examples 9 and 10.

**[Table 6]**

| Table 6. Coating Formulation *γ* | | | |
|---|---|---|---|
| Part | component | | Amount (parts by mass) |
| A | a | jER806 | 39.1 |
| | | LS-632 | 11.3 |
| | | Sila-Ace S510 | 2.3 |
| | | Dimethyl Carbonate | 2.0 |
| | b | Talc No. 1 | 8.8 |
| | | PG-K10 | 15.0 |
| | | Barium Sulfate BA | 22.1 |
| | | Tipaque R-820 | 1.3 |
| | c | Rheology Control Agent | 1.0 |
| Part A Total | | | 103.0 |
| B | Ancamine 2644 | | 21.5 |
| | Xylene | | 9.1 |

**[Table 7]**

| Table 7. Coating Formulation *δ* | | | |
|---|---|---|---|
| Part | component | | Amount (parts by mass) |
| A | a | jER806 | 39.1 |
| | | LS-AGE | 11.3 |
| | | Sila-Ace S510 | 2.3 |
| | | Dimethyl Carbonate | 2.0 |
| | b | Talc No. 1 | 8.8 |
| | | PG-K10 | 15.0 |
| | | Barium Sulfate BA | 22.1 |
| | | Tipaque R-820 | 1.3 |
| | c | Rheology Control Agent | 1.0 |
| Part A Total | | | 103.0 |
| B | Ancamine 2644 | | 19.0 |
| | Xylene | | 9.1 |

**[Table 8]**

| Table 8. Coating Formulation Composition and Evaluation Results 3 | | | | |
|---|---|---|---|---|
| No. | Rheology Control Agent | Coating Formation | Coating Viscosity [P] | Sagging Limit Film Thickness [µm] |
| Example 3 | Preparation Example 1 | Formulation *γ* | 21.1 | 1000 |
| Comparative Example 7 | Comparative Preparation Example 1 | Formulation *γ* | 6.9 | 300 |
| Comparative Example 8 | - | Formulation *γ* | 1.7 | 100 or less |

**[Table 9]**

| Table 9. Coating Formulation Composition and Evaluation Results 4 | | | | |
|---|---|---|---|---|
| No. | Rheology Control Agent | Coating Formation | Coating Viscosity [P] | Sagging Limit Film Thickness [µm] |
| Example 4 | Preparation Example 2 | Formulation *δ* | 18.6 | 1000 |
| Comparative Example 9 | Comparative Preparation Example 3 | Formulation *δ* | 11.7 | 400 |
| Comparative Example 10 | - | Formulation *δ* | 1.6 | 100 or less |

### (Evaluation Method)

For the non-aqueous coating compositions of Examples 3 and 4 and Comparative Examples 7 to 10 obtained as described above, the rheology-modifying effect and sagging resistance were evaluated in the same manner as in Experimental Example 1.

### (Evaluation Results)

Tables 8 and 9 above show the results of evaluation of the rheology-modifying effect and sagging resistance evaluated as described above.

As shown in Tables 8 and 9, the non-aqueous coating compositions of Examples 3 and 4, which contained 1,4-DAB as the diamine component, showed significant differences in viscosity and sagging limit film thickness, and exhibited superior rheology-modifying effect and sagging resistance, as compared with the non-aqueous coating compositions of Comparative Examples 7 and 9, which contained diamines other than 1,4-DAB (EDA) as the diamine component, and the non-aqueous coating compositions of Comparative Examples 8 and 10, which contained no rheology control agent.

## Claims

1. A rheology control agent for a non-aqueous coating, the rheology control agent consisting of a fatty acid diamide obtained by condensation reaction between a diamine component and a monocarboxylic acid component, wherein
the diamine component is 1,4-diaminobutane, and
the non-aqueous coating is a solvent-free coating or an ultra-high-solids coating.

2. The rheology control agent for a non-aqueous coating according to claim 1, wherein
the monocarboxylic acid component is a mixture of a hydrogenated castor oil fatty acid and a straight-chain saturated fatty acid.

3. The rheology control agent for a non-aqueous coating according to claim 2, wherein
the straight-chain saturated fatty acid has 8 or more and 10 or less carbon atoms.

4. The rheology control agent for a non-aqueous coating according to claim 1, wherein
the monocarboxylic acid component contains a straight-chain saturated fatty acid having 8 or more and 10 or less carbon atoms.

5. A non-aqueous coating composition containing a rheology control agent and a resin, the rheology control agent consisting of a fatty acid diamide obtained by condensation reaction between a diamine component and a monocarboxylic acid component, wherein
the diamine component is 1,4-diaminobutane, and
the non-aqueous coating composition is a solvent-free coating composition or an ultra-high-solids coating composition.

6. The non-aqueous coating composition according to claim 5, wherein
the monocarboxylic acid component is a mixture of a hydrogenated castor oil fatty acid and a straight-chain saturated fatty acid.

7. The non-aqueous coating composition according to claim 6, wherein
the straight-chain saturated fatty acid has 8 or more and 10 or less carbon atoms.

8. The non-aqueous coating composition according to claim 5, wherein
the monocarboxylic acid component contains a straight-chain saturated fatty acid having 8 or more and 10 or less carbon atoms.
